(19) Europäisches Patentamt / European Patent Office / Office européen des brevets

(11) **EP 3 844 556 B1**

(12) **EUROPÄISCHE PATENTSCHRIFT**

(45) Veröffentlichungstag und Bekanntmachung des Hinweises auf die Patenterteilung:
**11.03.2026   Patentblatt 2026/11**

(21) Anmeldenummer: **19733791.8**

(22) Anmeldetag: **28.06.2019**

(51) Internationale Patentklassifikation (IPC):
*G02B 27/01* *(2006.01)*

(52) Gemeinsame Patentklassifikation (CPC):
**G02B 27/0101; B60K 35/10; B60K 35/235; B60K 35/90;** G02B 2027/012

(86) Internationale Anmeldenummer:
**PCT/EP2019/067274**

(87) Internationale Veröffentlichungsnummer:
**WO 2020/043352 (05.03.2020 Gazette 2020/10)**

(54) **PRÜFVORRICHTUNG FÜR EIN HEAD-UP-DISPLAY (HUD)**

TESTING DEVICE FOR A HEADS-UP DISPLAY (HUD)

DISPOSITIF DE VÉRIFICATION POUR UN AFFICHAGE TÊTE HAUTE (HUD)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA**

(30) Priorität: **29.08.2018   EP 18191436**

(43) Veröffentlichungstag der Anmeldung:
**07.07.2021   Patentblatt 2021/27**

(73) Patentinhaber: **Saint-Gobain Sekurit France 60150 Thourotte (FR)**

(72) Erfinder:
• **ARNDT, Martin 52066 Aachen (DE)**
• **CAPPUCCILLI, Michele 52156 Monschau (DE)**
• **BABAJANI, Ninet 52062 Aachen (DE)**

(74) Vertreter: **Gebauer, Dieter Edmund Splanemann Patentanwälte mbB Rumfordstraße 7 80469 München (DE)**

(56) Entgegenhaltungen:
| | |
|---|---|
| WO-A1-2017/138430 | DE-A1- 102014 001 710 |
| US-A- 4 790 613 | US-A1- 2011 189 426 |
| US-A1- 2011 189 426 | US-A1- 2014 354 692 |
| US-A1- 2018 149 867 | US-A1- 2018 149 867 |
| US-A1- 2021 011 286 | US-B1- 9 551 867 |

• ALEXANDER NEUMANN: "Simulationsbasierte messtechnik zur pru?fung von head-up displays", 1 January 2012 (2012-01-01), XP055558288, Retrieved from the Internet <URL:https://mediatum.ub.tum.de/doc/1079689/1079689.pdf>
• ALEXANDER NEUMANN: "Simulationsbasierte messtechnik zur prüfung von head-up displays", 1 January 2012 (2012-01-01), XP055558288, Retrieved from the Internet <URL:https://mediatum.ub.tum.de/doc/1079689/1079689.pdf>

**Beschreibung**

Die Erfindung betrifft eine Prüfvorrichtung für ein Head-Up-Display (HUD) für ein kontaktanaloges HUD, sowie ein Verfahren zur Prüfung eines solchen HUD.

Moderne Automobile werden in zunehmendem Maße mit sogenannten Head-Up-Displays (HUDs) ausgestattet. Mit einem Projektor, beispielsweise im Bereich des Armaturenbretts oder im Dachbereich, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen. Die Projektionsdistanz (Abstand zwischen virtuellem Bild und Fahrer) eines klassischen HUD zur Anzeige statischer Informationen beträgt typischerweise etwa 2 m.

Eine neuere Variante des HUD wird als kontaktanaloges HUD oder *Augmented Reality* HUD bezeichnet. Diese HUDs zeichnen sich durch einen größeren HUD-Bereich (Projektionsfläche auf der Scheibe) und eine deutlich größere Projektionsdistanz aus von mindestens 5 m, typischerweise sogar über 7 m. Kontaktanaloge HUDs eröffnen die Möglichkeit, nicht mehr nur abzulesende Informationen statisch auf die Scheibe zu projizieren, sondern die optische Information zur Kennzeichnung von Elementen der realen Fahrzeugumgebung zu verwenden - beispielhafte Anwendungen sind die optische Markierung von Fahrbahnbegrenzungen, das optische Hervorheben von Fußgängern am Straßenrand, Navigationshinweise direkt auf der Fahrbahn oder die Markierung von Fahrzeugen, die vom Fahrassistenzsystem erkannt worden sind. Die größere Projektionsdistanz wird durch eine größere optische Weglänge der Strahlen innerhalb des Projektors erzeugt, etwa durch zusätzliche Spiegel und ein größeres Volumen. Kontaktanaloge HUDs sind beispielsweise bekannt aus DE102014001710A1, WO2014079567A1, US2013249942A1, US2014354692A1, US2014375816A1 und WO2013136374A1.

Bei der Konzeption eines HUD ist es üblich, die optische Qualität der Abbildung in einer Prüfvorrichtung zu untersuchen. Dabei wird die Windschutzscheibe mit einer bildgebenden Einheit bestrahlt, wobei ein der HUD-Abbildung entsprechendes virtuelles Bild erzeugt wird, typischerweise in Form eines charakteristischen Musters an Punkten und Linien. Dieses Bild wird durch die Windschutzscheibe hindurch mit einer Kameraeinheit aus einer Vielzahl möglicher Augpositionen eines Fahrers aufgenommen. Anhand der Bilder kann dann das Auftreten von Verzerrungen, Verzeichnungen, Geisterbilder infolge von Mehrfachreflexionen und sonstiger optischer Effekte für verschiedene Augpositionen detailliert ausgewertet werden.

Infolge der gekrümmten Geometrie üblicher Windschutzscheiben und der damit verbundenen Bildfeldwölbung ist das virtuelle HUD-Bild nicht in einer Ebene angeordnet, sondern ebenfalls im Raum gekrümmt. Dies stellt bei der Prüfung herkömmlicher HUDs kein Problem dar, weil das Bild nur eine relativ kleine Ausdehnung aufweist und daher trotz der Krümmung insgesamt scharf mit der Kameraeinheit aufgenommen werden kann. Bei kontaktanalogen HUDs mit ihrer wesentlich ausgedehnteren Bildgröße kann die Bildkrümmung aber dazu führen, dass stets Teile des Bildes infolge der begrenzten Tiefenschärfe der Kameraeinheit unscharf dargestellt werden, was die Auswertung erschwert oder unmöglich macht. Weitere Abbildungsfehler ergeben sich aus dem Astigmatismus, da die Strahlung mit einem Winkel zur optischen Achse auf die Windschutzscheibe trifft.

In der Dissertation von Alexander Neumann: "Simulationsbasierte Messtechnik zur Prüfung von Head-up Displays", 1. Januar 2012 (2012-01-01), XP055558288, ist ein Prüfplatz zur Untersuchung eines Head-up Displays an einem Scheibenmaster gezeigt. Die Verwendung eines gekrümmten Spiegels zum Ausgleich von Bildfehlern durch die Krümmung der Windschutzscheibe geht aus WO 2017/138430 A1, US 4790613 A und US 9551867 B1 hervor.

Der Erfindung liegt die Aufgabe zugrunde, eine verbesserte Prüfvorrichtung für ein Head-Up-Display (HUD) bereitzustellen, welche auf kontaktanaloge HUDs anwendbar ist.

Diese Aufgabe wird erfindungsgemäß durch eine Prüfvorrichtung gemäß Anspruch 1 gelöst. Bevorzugte Ausführungen gehen aus den Unteransprüchen hervor.

Gattungsgemäße Prüfvorrichtungen umfassen eine bildgebende Einheit, eine Positionierungsvorrichtung und eine Kameraeinheit. Die erfindungsgemäße Prüfvorrichtung für ein Head-Up-Display (HUD) umfasst darüber hinaus ein optisches Element. Die bildgebende Einheit sendet Strahlung aus, um nach Reflexion an einer zu prüfenden Windschutzscheibe ein virtuelles Bild zu erzeugen, dessen Positionierung und Ausdehnung dem späteren HUD-Bild entspricht. Die Windschutzscheibe wird aber nicht direkt von der bildgebenden Einheit bestrahlt, sondern indirekt über das optische Element. Das optische Element ist geeignet und dafür vorgesehen, die Strahlung der bildgebenden Einheit in Richtung der Windschutzscheibe umzulenken und dadurch den HUD-Bereich der Windschutzscheibe zu bestrahlen, um das virtuelle Bild zu erzeugen. Die Positionierungsvorrichtung ist geeignet und dafür vorgesehen, die Windschutzscheibe in einer definierten Anordnung zum optischen Element und zur bildgebenden Einheit zu fixieren. Die Windschutzscheibe soll dabei von der bildgebenden Einheit in der gleichen Weise bestrahlt werden wie später vom HUD-Projektor im Fahrzeug, damit das in der Prüfvorrichtung erzeugte Bild ein gutes Modell für die spätere HUD-Projektion ist. Die Strahlung der bildgebenden Einheit soll also im Wesentlichen mit gleichem Einstrahlwinkel und gleichem Öffnungswinkel auf den gleichen Bereich der Windschutzscheibe treffen wie später die Strahlung des HUD-Projektors. Die Kameraeinheit ist geeignet und dafür vorgesehen, das virtuelle Bild durch die Windschutzscheibe hindurch aus verschiedenen Augpositionen aufzunehmen. Als Augpositionen werden mögliche Positionierungen der Augen eines späteren Betrachters/Nutzers des HUD bezeichnet.

Durch das optische Element kann die Krümmung des virtuellen Bildes im Raum (Bildfeldwölbung) verringert werden, so dass das gesamte Bild von der Kameraeinheit scharf aufgenommen werden kann, was ein großer Vorteil der vorliegenden Erfindung ist. Das optische Element ist dazu derart ausgelegt, dass das gesamte virtuelle Bild innerhalb des Tiefenschärfebereichs der Kameraeinheit liegt. Damit ist genauer gesagt gemeint, dass die Ausdehnung des Bildes entlang der optischen Achse (verlaufend zwischen Kameraeinheit und Zentrum des Bildes) kleiner oder gleich der Ausdehnung des Tiefenschärfebereichs der Kameraeinheit ist, so dass es möglich ist, die Kameraeinheit derart auf das Bild zu fokussieren, dass das gesamte Bild innerhalb dieses Tiefenschärfebereichs liegt und somit scharf dargestellt wird. Das Bild umfasst dabei streng genommen die Überlagerung von Hauptbild und Geisterbild, da beide scharf dargestellt werden sollen. Idealerweise ist das Hauptbild in einer einzigen Ebene angeordnet, auf welche die Kameraeinheit fokussiert werden kann. Eine leichte Abweichung von dieser idealen Planarität, also eine leichte Restkrümmung des Bildes ist aber akzeptabel. Das Maß der akzeptablen Krümmung ist dabei von der verwendeten Kameraeinheit und ihrer Tiefenschärfe abhängig. Neben der Bildfeldwölbung kann auch ein Astigmatismus durch das erfindungsgemäße optische Element kompensiert werden.

Mit der Erfindung wird eine Verkürzung der Bildausdehnung bezweckt, die es erst ermöglicht, das komplette Bild innerhalb des Tiefenschärfebereichs der Kamera aufzunehmen. Dieses Problem tritt im Zusammenhang mit kontaktanalogen HUDs auf. Es würde daher das virtuelle Bild ohne Verwendung des optischen Elements nicht vollständig innerhalb des Tiefenschärfebereichs der Kameraeinheit liegen. Anders ausgedrückt ist die Ausdehnung des Bildes entlang der optischen Achse ohne Verwendung des optischen Elements größer als der Tiefenschärfebereich der Kameraeinheit.

Ein weiterer Vorteil der Erfindung besteht darin, dass der Strahlengang durch das optische Element gleichsam geknickt wird, wodurch die Prüfvorrichtung deutlich platzsparender gestaltet werden kann, was insbesondere im Zusammenhang mit kontaktanalogen HUDs und ihren großen Projektionsdistanzen vorteilhaft ist.

Die Erfindung umfasst gleichermaßen ein Verfahren zur Prüfung eines HUD mit einer erfindungsgemäßen Prüfvorrichtung, umfassend die folgenden Verfahrensschritte:

(a) Positionierung einer Windschutzscheibe mit einem HUD-Bereich mittels einer Positionierungsvorrichtung in einer definierten Anordnung zu einem optischen Element,
(b) Bestrahlung des optischen Elements durch eine bildgebende Einheit, wobei die Strahlung durch das optische Element in Richtung der Windschutzscheibe umgelenkt wird und der HUD-Bereich bestrahlt wird, wobei ein virtuelles Bild erzeugt wird,
(c) Aufnahme des virtuellen Bildes mittels einer Kameraeinheit aus verschiedenen Augpositionen,

wobei das optische Element (13) derart ausgelegt ist, dass das gesamte virtuelle Bild (7) innerhalb des Tiefenschärfebereichs ($\Delta$d) der Kameraeinheit (12) liegt.

Die Erfindung wird im Folgenden detailliert beschrieben, wobei sich bevorzugte Ausgestaltungen gleichermaßen auf die Vorrichtung und das Verfahren beziehen.

Das optische Element ist ein gekrümmter Spiegel. Durch eine geeignete Gestaltung der Krümmung des Spiegels ist es möglich, die unerwünschte Bildfeldkrümmung des virtuellen Bildes zu kompensieren und auch einen etwaigen Astigmatismus. So kann sich beispielsweise der Krümmungsradius des Spiegels ausgehend vom Zentrum in Richtung des Randes ändern, um die Positionierung des durch die jeweiligen Spiegelbereiche erzeugten Anteile des Bildes zu beeinflussen. Bei der Konzeptionierung des Spiegels ist die Geometrie der zu prüfenden Scheibe entscheidend und auch die Position der Kameraeinheit zu berücksichtigen. Die erforderliche Gestaltung, insbesondere Krümmung des Spiegels kann durch fachübliche Methoden bestimmt werden, beispielsweise unter Verwendung der bekannten Coddington-Gleichungen, insbesondere unter Anwendung sogenannter Raytracing-Verfahren. Das optische Element ist besonders bevorzugt ein hochpolierter Metallspiegel, die mit hoher Präzision gefertigt werden können. Alternativ sind aber auch andere optische Elemente denkbar, beispielsweise Linsen mit einem geeigneten Krümmungsprofil.

In einer bevorzugten Ausgestaltung ist das optische Element, insbesondere wenn es als Spiegel ausgebildet ist, nicht drehbar, sondern statisch gelagert. Dadurch kann ein einfacherer und weniger fehleranfälliger Aufbau realisiert werden, der eine höhere Messgenauigkeit und eine schnellere Messung erlaubt. Das optische Element muss dann so ausgelegt sein, dass die gesamte Eyebox simultan ausgeleuchtet wird. Dies unterscheidet das erfindungsgemäße optische Element insbesondere von einem Spiegel innerhalb eines HUD-Projektors, der nur ein begrenztes Eyeboxfenster bestrahlen kann und zur Abdeckung der gesamten Eyebox gedreht werden muss.

Die erfindungsgemäße Prüfvorrichtung eignet sich besonders vorteilhaft zur Prüfung von kontaktanalogen HUDs (sogenannten *Augmented Reality Head-Up-Displays* (AR-HUD)). Diese weisen deutlich größere Projektionsdistanzen (Abstand zwischen Bild und Betrachter) auf als klassische HUDs und deutlich größere Projektionsbilder. Dadurch macht sich der Effekt der Krümmung des Projektionsbildes bei der Aufnahme desselben stärker bemerkbar, so dass es eventuell mit herkömmlichen Prüfvorrichtungen nicht möglich ist, das gesamte Bild scharf aufzunehmen, da sich Teile des Bildes außerhalb des Tiefenschärfebereichs der Kameraeinheit erstrecken. Dieser Effekt wird durch die erfindungsgemäße Vorrichtung verringert. Klassische HUDs weisen Projektionsdistanzen kleiner 3 m auf, während kontaktanaloge HUDs Projektionsdistanzen von (teilweise deutlich) über 3 m aufweisen. Das virtuelle Bild wird daher mit einer Projektionsdistanz von mehr als 3 m erzeugt, bevorzugt mehr als 4 m, besonders bevorzugt mehr als 5 m.

Eine Projektionsanordnung für ein Head-Up-Display (HUD) umfasst mindestens eine Fahrzeug-Windschutzscheibe (insbesondere eines Kraftfahrzeugs, beispielsweise eines Personenkraftwagens) und einen Projektor. Der Projektor bestrahlt einen Bereich der Windschutzscheibe, wo die Strahlung in Richtung des Betrachters (Fahrers) reflektiert wird, wodurch ein virtuelles Bild erzeugt wird, welches der im Fahrzeug befindliche Betrachter von ihm aus gesehen hinter der Windschutzscheibe wahrnimmt. Der durch den Projektor bestrahlbare Bereich der Windschutzscheibe wird als HUD-Bereich bezeichnet. Der Projektor ist auf den HUD-Bereich gerichtet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper. Die Eyebox ist gleichsam die Summe aller möglichen Positionierungen der Augen eines Betrachters, die typischerweise als Augpositionen bezeichnet werden. Der Strahl, der zwischen dem Projektor und der Mitte der Eyebox verläuft, wird gemeinhin als Mittenstrahl bezeichnet. Er ist ein charakteristischer Bezugsstrahl für die Konzeption einer HUD-Projektionsanordnung.

Die hier verwendeten Fachbegriffe aus dem Bereich der HUDs sind dem Fachmann allgemein bekannt. Für eine ausführliche Darstellung sei auf die bereits eingangs genannte Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Wahrnehmung der HUD-Projektion ist von der Augposition abhängig. So ist ein HUD üblicherweise konzeptionell auf die Mitte der Eyebox optimiert und bei anderen Augpositionen können mitunter Verzerrungen, stärkere Geisterbilder oder sonstige unerwünschte optische Effekte auftreten. Dies soll mit der erfindungsgemäßen Vorrichtung überprüft werden.

Der HUD-Bereich der Windschutzscheibe wird mittels der bildgebenden Einheit zur Erzeugung eines virtuellen Testbildes bestrahlt. Das Testbild ist ein Muster aus Punkten und/oder Linien. Solche Muster lassen sich im Anschluss gut hinsichtlich optischer Kriterien quantitativ auswerten. Das Muster kann eine Vorverzerrung aufweisen, so dass eine etwaige durch die Windschutzscheibe unvermeidbar hervorgerufene Verzerrung kompensiert wird und das Muster im virtuellen Bild (zumindest hinsichtlich des Mittenstrahls) regelmäßig erscheint. Erfindungsgemäß umfasst die bildgebende Einheit eine Platte und eine flächige Lichtquelle, welche die Platte hinterleuchtet. In die Platte ist das Muster in Form von Durchführungen nach Art einer Lochplatte eingebracht. Die Platte kann beispielsweise aus Metall oder Kunststoff gefertigt sein. Alternativ kann die bildgebende Einheit aber auch beispielsweise als ein Display (Bildschirm) realisiert werden, beispielsweise ein LED-, LCD- oder DLP-Display.

Die Strahlung der bildgebenden Einheit trifft auf das optische Element und wird von diesem auf den HUD-Bereich der in der Positionierungsvorrichtung fixierten Windschutzscheibe geworfen. Die Positionierungsvorrichtung ist beispielsweise eine Halterung, in welche die Windschutzscheibe eingespannt wird, damit ihre Position reproduzierbar ist. Die relative Anordnung von Windschutzscheibe, optischem Element und bildgebender Einheit ist dabei so gewählt, dass die Strahlung im gleichen Winkel und der gleichen Ausdehnung auf die Windschutzscheibe trifft wie später die Strahlung des HUD-Projektors, damit das Testbild ein realistisches Modell für die HUD-Projektion ist.

Das so erzeugte virtuelle Testbild wird mittels der Kameraeinheit aus verschiedenen Augpositionen aufgenommen. Hierzu kann eine einzelne Kamera verwendet werden, die beweglich montiert ist, beispielsweise an einem Roboterarm, so dass sie zwischen den verschiedenen Augpositionen bewegt werden kann. Alternativ kann auch eine Vielzahl von Kameras verwendet werden, die jeweils einer Augposition zugeordnet sind. Eine Bewegung während der Prüfung ist dann nicht erforderlich und die Kameras sind folglich bevorzugt statisch angebracht.

Mithilfe fachüblicher Bildverarbeitungsprogramme werden die von der Kameraeinheit aufgenommen Bilder im Anschluss analysiert. So kann in Abhängigkeit von der Augposition insbesondere das Auftreten und die Intensität von Geisterbildern Verzerrungen, beispielsweise rotatorische oder trapezförmige Verzerrungen, sowie sonstige optischer Effekte untersucht werden.

Eine Windschutzscheibe umfasst üblicherweise eine Außenscheibe und eine Innenscheibe, die über eine thermoplastische Zwischenschicht miteinander verbunden sind. Die Windschutzscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Innenraum (Fahrzeuginnenraum) zugewandte Scheibe der Verbundscheibe bezeichnet. Mit Außenscheibe wird die der äußeren Umgebung zugewandte Scheibe bezeichnet. Windschutzscheiben sind typischerweise gekrümmt, wobei übliche Krümmungsradien im Bereich von etwa 10 cm bis etwa 40 m liegen. Im HUD-Bereich treten typischerweise Krümmungsradien von 2 m bis 20 m auf. Die innenraumseitige Oberfläche der Innenscheibe ist dabei im Wesentlichen konkav ausgeführt, die außenseitige Oberfläche der Außenscheibe konvex. Mit innenraumseitiger Oberfläche wird dabei die Oberfläche bezeichnet, die in Einbaulage dem Innenraum des Fahrzeugs zugewandt ist. Mit außenseitiger Oberfläche wird die Oberfläche bezeichnet, die in Einbaulage der äußeren Umgebung zugewandt ist.

Ebenso wie im HUD wird die Windschutzscheibe in der Prüfvorrichtung ausgehend von der Innenseite bestrahlt. Der HUD-Projektor und die bildgebende Einheit sind also innenraumseitig der Windschutzscheibe angeordnet, so dass deren Innenscheibe ihnen zugewandt ist. Die Windschutzscheibe wird als über die innenraumseitige Oberfläche der Innenscheibe bestrahlt.

Bei HUDs ist das Problem sogenannter Geisterbilder verbreitet. Der Projektor ist im Innenraum des Fahrzeugs angeordnet und seine Strahlung trifft auf die innenraumseitige Oberfläche der Innenscheibe, wo ein Teil reflektiert wird in Richtung der Augen des Fahrers, wobei das erwünschte virtuelle Bild erzeugt wird, welches der Fahrer von ihm aus gesehen hinter der Windschutzscheibe, also außenseitig, wahrnimmt. Der Großteil der Strahlung tritt durch die Windschutzscheibe hindurch, wobei an der außenseitigen Oberfläche der Außenscheibe wiederum ein Teil reflektiert wird. Diese Sekundärreflexion erzeugt ein weiteres HUD-Bild - eben das Geisterbild, welches vom Fahrer leicht versetzt zum Hauptbild und mit geringerer Intensität störend wahrgenommen wird. Typischer Windschutzscheiben weisen eine Keilform auf, so dass die innenraumseitige Oberfläche der Innenscheibe und die außenseitige Oberfläche der Außenscheibe gewinkelt zueinander angeordnet sind, um das Geisterbild mit dem Hauptbild zu überlagern oder zumindest deren Abstand zu reduzieren, so dass das Geisterbild weniger störend auffällt. Diese Kompensation ist jedoch häufig nicht ideal und zudem von der Augposition abhängig.

Die Keilform der Windschutzscheibe wird üblicherweise durch die Verwendung einer keilartigen thermoplastischen Zwischenschicht erreicht. Dabei ist die Dicke der Zwischenschicht im vertikalen Verlauf zwischen der Oberkante und der Unterkante der Windschutzscheibe zumindest abschnittsweise veränderlich. Mit "abschnittsweise" ist hier gemeint, dass der vertikale Verlauf zwischen Oberkante und Unterkante zumindest einen Abschnitt aufweist, in dem sich die Dicke der Zwischenschicht ortsabhängig ändert, die Zwischenschicht also einen Keilwinkel aufweist. Die Dicke der Zwischenschicht ist zumindest im HUD-Bereich veränderlich. Die Dicke kann sich aber auch in mehreren Abschnitten ändern oder im gesamten vertikalen Verlauf, beispielsweise von der Unterkante zur Oberkante im Wesentlichen stetig zunehmen. Mit vertikalem Verlauf ist der Verlauf zwischen Oberkante und Unterkante mit Verlaufsrichtung im Wesentlichen senkrecht zur Oberkante bezeichnet. Da die Oberkante bei Windschutzscheiben stark von einer Geraden abweichen kann, ist der vertikale Verlauf im Sinne der Erfindung präziser ausgedrückt senkrecht zur Verbindungslinie zwischen den Ecken der Oberkante ausgerichtet. Die Zwischenschicht weist zumindest abschnittsweise einen endlichen Keilwinkel auf, also einen Keilwinkel größer 0°, nämlich in dem Abschnitt, in dem die Dicke veränderlich ist. Mit Keilwinkel wird der Winkel zwischen den beiden Oberflächen der Zwischenschicht bezeichnet. Ist der Keilwinkel nicht konstant, so sind zu seiner Messung an einem Punkt die Tangenten an die Oberflächen heranzuziehen. Typische Keilwinkel liegen im Bereich von 0,2 mrad bis 1 mrad, insbesondere von 0,3 mrad bis 0,7 mrad. Der Keilwinkel kann im vertikalen Verlauf konstant sein, was zu einer linearen Dickenänderung der Zwischenschicht führt, wobei die Dicke typischerweise und bevorzugt von unten nach oben größer wird. Die Richtungsangabe "von unten nach oben" bezeichnet die Richtung von Unterkante zu Oberkante. Es können aber auch komplexere Dickenprofile vorliegen, bei denen der Keilwinkel von unten nach oben veränderlich (das heißt im vertikalen Verlauf ortsabhängig) ist, linear oder nichtlinear.

Bei einem kontaktanalogen HUD oder *Augmented Reality* HUD wird nicht lediglich eine Information auf einen begrenzten Bereich der Windschutzscheibe projiziert, sondern Elemente der äußeren Umgebung in die Darstellung einbezogen. Beispiele hierfür sind die Markierung eines Fußgängers, die Anzeige des Abstands zu einem vorausfahrenden Fahrzeug oder die Projektion einer Navigationsangabe direkt auf die Fahrbahn, beispielsweise zur Markierung der zu wählenden Fahrspur. Das kontaktanaloge HUD wird dadurch von einem klassischen, statischen HUD unterschieden, dass die Projektionsdistanz größer als 3 m beträgt, bevorzugt größer als 4 m, typischerweise sogar mehr als 5 m. Bei einem statischen HUD ist die Projektionsdistanz deutlich geringer, typischerweise etwa 2 m. Mit Projektionsdistanz wird im Sinne der Erfindung der Abstand zwischen dem virtuellen Bild und dem Betrachter, also in der Regel der Kopf des Fahrers, bezeichnet. Die Projektionsdistanz beträgt bevorzugt mindestens 7 m. Die Projektionsdistanz beträgt bevorzugt höchstens 15 m.

Bei einer Projektionsanordnung eines kontaktanalogen HUDs ist die Projektionsdistanz für alle projizierten Bilder im Wesentlichen konstant. Auch Projektionen, die der Betrachter subjektiv mit unterschiedlichem Abstand wahrnehmen soll, haben in der Realität im Wesentlichen die gleiche Projektionsdistanz. Der subjektive Eindruck eines unterschiedlichen Abstands wird durch geometrische optische Effekte erreicht.

Der Abstand zwischen Windschutzscheibe und virtuellem Bild wird üblicherweise als Bildweite bezeichnet. Da typischerweise der Kopf des Fahrers einen Abstand von etwa einem Meter zur Windschutzscheibe aufweist, ist die Bildweite näherungsweise um 1 m geringer als die Projektionsdistanz. Alternativ zur Projektionsdistanz kann daher mit hinreichender Genauigkeit auch die Bildweite als Kriterium herangezogen werden. Die Bildweite beträgt demnach bevorzugt mehr als 2 m, besonders bevorzugt mehr als 3 m, ganz besonders bevorzugt mehr als mindestens 4 m und bevorzugt höchstens 14 m.

Der HUD-Bereich ist bei einem kontaktanalogen HUD typischerweise größer als bei einem klassischen statischen HUD. In einer bevorzugten Ausgestaltung beträgt die Fläche des HUD-Bereichs mindestens 7 % der Fläche der Windschutzscheibe, besonders bevorzugt mindestens 8 %. Die Fläche des HUD-Bereichs eines statischen HUDs beträgt typischerweise höchstens 4-5 % der Fläche der Windschutzscheibe.

Die Innenscheibe und die Außenscheibe bestehen bevorzugt aus Glas, besonders bevorzugt Kalk-Natron-Glas, was sich für Fenstergläser bewährt hat. Die Scheiben können aber auch aus anderen Glassorten bestehen, beispielsweise Borosilikatglas oder Aluminosilikatglas. Die Scheiben können grundsätzlich alternativ aus Kunststoff gefertigt sein, insbesondere Polycarbonat oder PMMA. Die Dicken der Außenscheibe und der Innenscheibe können grundsätzlich im Rahmen der fachüblichen Werte frei gewählt werden. Für herkömmliche Windschutzscheiben sind Dicken der Einzelscheiben im Bereich 1 mm bis 5 mm, insbesondere 1,2 mm bis 3 mm üblich. Standardscheibendicken sind beispielsweise 2,1 mm oder 1,6 mm. Die Außenscheibe, die Innenscheibe und die thermoplastische Zwischenschicht können klar und farblos, aber auch getönt oder gefärbt sein. Die Gesamttransmission durch das Verbundglas beträgt in einer bevorzugten Ausgestaltung größer 70%, insbesondere wenn das Verbundglas eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

Die Zwischenschicht ist üblicherweise durch mindestens eine thermoplastische Folie ausgebildet, bevorzugt auf Basis von Polyvinylbutyral (PVB), Ethylenvinylacetat (EVA), Polyurethan (PU) oder Gemischen oder Copolymeren oder Derivaten davon, besonders bevorzugt PVB. Die Dicke der Zwischenschicht, gemessen an ihrer dünnen Kante im Falle einer Keilfolie, liegt typischerweise im Bereich von 0,2 mm bis 2 mm, insbesondere 0,5 mm bis 1 mm.

Der Einbauwinkel der Windschutzscheibe liegt typischerweise im Bereich von 55° bis 75° zur Horizontalen, insbesondere von 60° bis 70°, beispielsweise etwa 65°.

Gezeigt ist außerdem eine Prüfanordnung für ein HUD, umfassend die erfindungsgemäße Prüfvorrichtung und eine in der Positionierungsvorrichtung fixierte Windschutzscheibe.

Die erfindungsgemäß geprüfte HUD wird bevorzugt in einem Fahrzeug verwendet, besonders bevorzugt in einem Kraftfahrzeug, ganz besonders bevorzugt in einem Personenkraftwagen.

Gezeigt ist außerdem die Verwendung eines optischen Elements zur Umlenkung der Strahlung einer bildgebenden Einheit auf einen HUD-Bereich einer Windschutzscheibe, deren Anordnung zum optischen Elements durch eine Positionierungsvorrichtung fixiert ist, wobei ein virtuelles Bild erzeugt wird, welches durch die Windschutzscheibe hindurch zu Prüfungszwecken mittels einer Kameraeinheit aus verschiedenen Augpositionen aufgenommen wird, wobei das optische Element derart ausgelegt ist, dass das gesamte virtuelle Bild innerhalb des Tiefenschärfebereichs der Kameraeinheit liegt.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:

Fig. 1     eine Draufsicht auf die Windschutzscheibe für ein HUD,

Fig. 2     einen Querschnitt durch die Windschutzscheibe aus Fig. 1 als Projektionsfläche eines HUD,

Fig. 3     eine Seitenansicht durch eine herkömmliche Prüfvorrichtung für HUDs,

Fig. 4     eine Seitenansicht durch eine erfindungsgemäße Prüfvorrichtung für HUDs,

Fig. 5     simulierte Beispielbilder einer herkömmlichen Prüfvorrichtung nach Fig. 3 und einer erfindungsgemäßen Prüfvorrichtung nach Fig. 4 und

Fig. 6     eine schematische Veranschaulichung der Ausdehnung des virtuellen Bildes und des Tiefenschärfebereichs der Kameraeinheit.

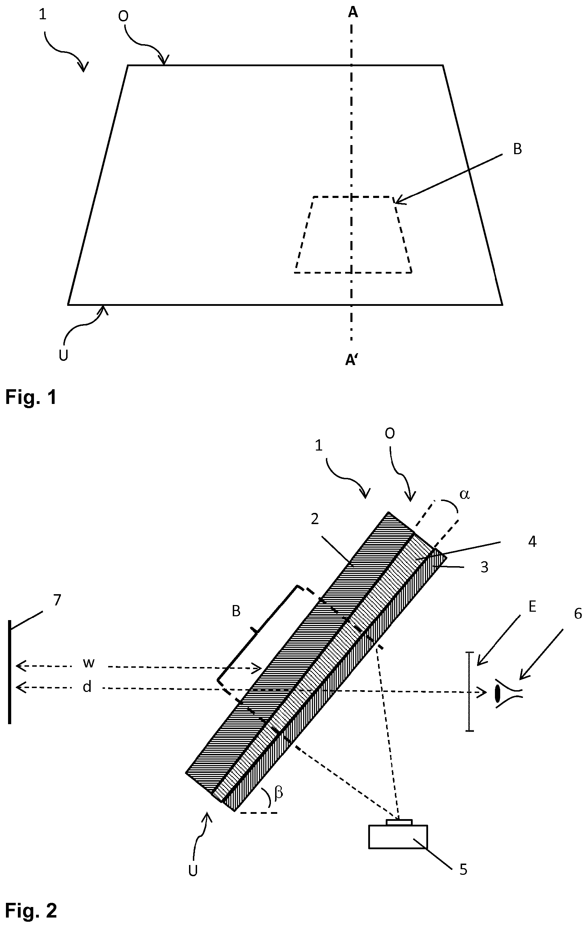

Fig. 1 zeigt eine Draufsicht auf eine Windschutzscheibe 1 einer HUD-Projektionsanordnung. Die Windschutzscheibe 1 hat eine Oberkante O, eine Unterkante U und zwei diese verbindende Seitenkanten. Die Oberkante O weist in Einbaulage nach oben zum Fahrzeugdach (Dachkante), die Unterkante U nach unten zum Motorraum (Motorkante). Die Windschutzscheibe 1 weist einen HUD-Bereich B auf, welcher in Einbaulage vom HUD-Projektor bestrahlbar ist und im Betrieb bestrahlt wird.

Fig. 2 zeigt einen Querschnitt durch eine HUD-Projektionsanordnung, umfassend die Windschutzscheibe 1 aus Fig. 1 sowie einen HUD-Projektor 5. Die Windschutzscheibe 1 ist durch die Schnittlinie A-A' geschnitten. Die Windschutzscheibe 1 besteht aus einer Außenscheibe 2 und einer Innenscheibe 3, die über eine thermoplastische Zwischenschicht 4 miteinander verbunden sind. Die Windschutzscheibe 1 trennt den Fahrzeuginnenraum von der äußeren Umgebung, wobei die Außenscheibe 2 in Einbaulage der äußeren Umgebung zugewandt ist, die Innenscheibe 3 dem Fahrzeuginnenraum. Der Einbauwinkel β zur Horizontalen beträgt beispielsweise 65°.

Die Außenscheibe 2 und die Innenscheibe 3 bestehen beispielsweise aus nichtvorgespanntem Kalk-Natron-Glas. Die Außenscheibe 2 weist beispielsweise eine Dicke von 2,1 mm auf und die Innenscheibe 3 eine Dicke von 1,6 mm. Diese Scheiben sind für Windschutzscheiben gebräuchlich. Die Dicke der Zwischenschicht 4 nimmt im vertikalen Verlauf von der Unterkante U zur Oberkante O stetig zu mit einem im Wesentlichen konstanten Keilwinkel α zwischen den beiden Oberflächen. Die Zwischenschicht 4 ist aus einer einzelnen Folie aus PVB ausgebildet. Die Dicke der Zwischenschicht 4 an der Oberkante O beträgt beispielsweise 1,0 mm und an der Unterkante U beispielsweise 0,76 mm. Durch die keilförmige Ausbildung der Zwischenschicht 4 werden die beiden Bilder, die durch Reflexion des Projektorbildes an den beiden von der Zwischenschicht 4 abgewandten Oberflächen der Außenscheibe 2 und der Innenscheibe 3 erzeugt werden, miteinander überlagert. Störende Geisterbilder treten daher in geringerem Maße auf.

Der Projektor 5 ist auf den HUD-Bereich B gerichtet. In diesem Bereich sollen Bilder durch den Projektor 5 erzeugt werden. Das Projektorbild wird von der Windschutzscheibe 1 in Richtung des Betrachters 6 (Fahrzeugfahrer) reflektiert. Dadurch entsteht das virtuelle Bild 7, welches der im Fahrzeug befindliche Betrachter 6 von ihm aus gesehen hinter der Windschutzscheibe 1 wahrnimmt. Der Abstand zwischen dem Betrachter 6 und dem virtuellen Bild 7 wird als Projektionsdistanz d bezeichnet. Der Abstand zwischen der Windschutzscheibe 1 und dem virtuellen Bild 7 wird als Bildweite w bezeichnet.

Die Projektionsanordnung ist ein sogenanntes kontaktanaloges HUD oder *Augmented Reality-HUD,* welches sich durch eine große Projektionsdistanz d von beispielsweise 10 m auszeichnet. Dies ermöglicht die Einbeziehung der Umgebung in die optische Darstellung, wodurch beispielsweise die zu wählende Fahrspur als Navigationshinweis für den Betrachter 6 scheinbar direkt auf die Fahrbahn projiziert werden kann. Neben der größeren Projektionsdistanz d unterscheidet sich das kontaktanaloge HUD vom klassischen HUD auch durch einen größeren HUD-Bereich B, dessen Fläche beispielsweise 9 % der Fläche der Windschutzscheibe 1 beträgt.

Der Bereich, innerhalb dessen sich die Augen des Betrachters 6 befinden müssen, um das virtuelle Bild wahrzunehmen, wird als Eyeboxfenster bezeichnet. Das Eyeboxfenster ist durch Spiegel im Projektor 5 vertikal verstellbar, um das HUD an Betrachter 6 unterschiedlicher Körpergröße und Sitzposition anpassen zu können. Der gesamte zugängliche Bereich, innerhalb dessen das Eyebox-Fenster verschoben werden kann, wird als Eyebox E bezeichnet.

Bei einem HUD können eine Reihe unerwünschter optischer Effekte auftreten. Zum einen betrifft dies Verzerrungen der Darstellung, wie Rotationen oder trapezartige Verzerrungen. Zum anderen wird die Projektorstrahlung an beiden äußeren Oberflächen der Windschutzscheibe 1 reflektiert, so dass neben dem Hauptbild auch ein leicht versetztes Geisterbild erzeugt wird. Durch den Keilwinkel α sollen Hauptbild und Geisterbild einander weitestgehend überlagert werden, wobei der Konzeption des Keilwinkels meist der Mittenstrahl zugrunde gelegt wird (Strahl zwischen Projektor 5 und Mitte der Eyebox E). Das Auftreten der optischen Effekte ist aber stark von der Augposition abhängig, also der genauen Anordnung des Betrachters innerhalb der Eyebox E. Daher sollte das Auftreten der Effekte in Abhängigkeit von der Augposition getestet werden, wozu Prüfvorrichtungen dienen, die Gegenstand der vorliegenden Erfindung sind.

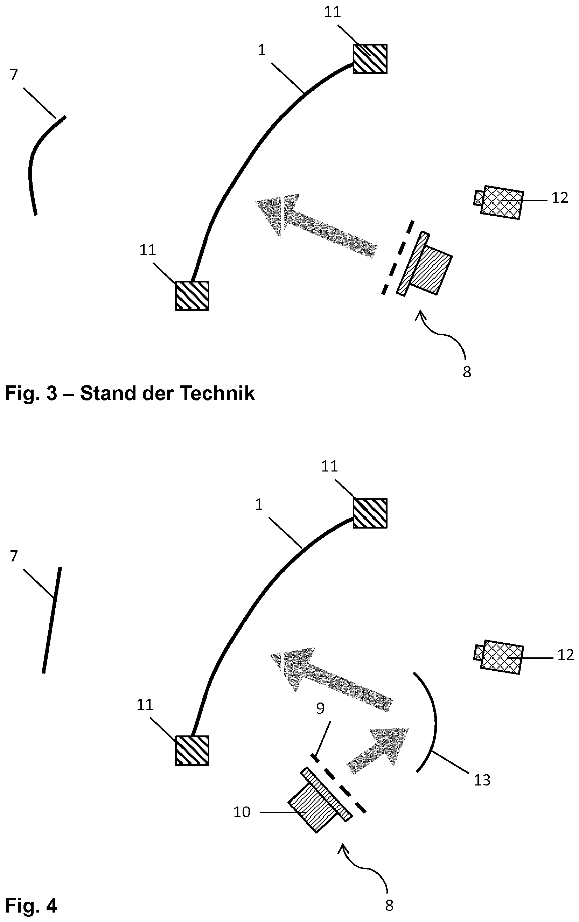

Fig. 3 zeigt eine gattungsgemäße Prüfvorrichtung für HUDs nach dem Stand der Technik. Eine Windschutzscheibe 1 für ein HUD ist in einer Positionierungsvorrichtung 11 fixiert, die ihre Anordnung zu einer bildgebenden Einheit 8 festlegt. Die bildgebende Einheit umfasst eine Platte 9 mit einem charakteristischen Muster aus Durchführungen (Löchern) in Form von Punkten und/oder Linien, und außerdem eine flächige Lichtquelle 10, welche die Platte 9 hinterleuchtet. Die relative Anordnung von Windschutzscheibe 1 und bildgebender Einheit 8 entspricht der relativen Anordnung von Windschutzscheibe 1 und HUD-Projektor 5 im geplanten HUD-Aufbau am Einsatzort. Der HUD-Bereich B der Windschutzscheibe 1 wird durch die bildgebende Einheit 8 bestrahlt, wobei ein virtuelles Bild 7 des charakteristischen Musters an Punkten und/oder Linien hinter der Windschutzscheibe 1 erzeugt wird. Die Strahlung ist durch einen grauen Blockpfeil dargestellt. Das virtuelle Bild 7 wird mit einer Kameraeinheit 12, beispielsweise einer an einem Roboterarm befestigten Kamera, aus verschiedenen Augpositionen innerhalb der Eyebox E aufgenommen. Die Bilder der Kameraeinheit 12 können im Anschluss mittels einer Bildbearbeitungssoftware detailliert ausgewertet werden. So können insbesondere unerwünschte optische Effekte, wie das Auftreten von Geisterbildern oder Verzerrungen, quantitativ und in Abhängigkeit von der Augposition ausgewertet werden, um Rückschlüsse auf die Qualität der HUD-Abbildung zu ziehen.

Wie in der Darstellung angedeutet, ist das virtuelle Bild 7 nicht plan, sondern insbesondere aufgrund der Scheibenkrümmung im Raum gekrümmt. Insbesondere bei größeren Bildern 7, wie sie bei kontaktanalogen HUDs auftreten, können dabei Probleme bei der Aufnahme auftreten. Die Kameraeinheit 12 hat einen begrenzten Tiefenschärfebereich, so dass es mitunter nicht möglich ist, das gesamte Bild scharf aufzunehmen. Stattdessen existieren bei jeder Fokusebene Bereiche des Bildes 7, die sich außerhalb des Tiefenschärfebereichs erstrecken und daher unscharf aufgenommen werden. Dies beeinträchtigt die Auswertung der Aufnahmen.

Fig. 4 zeigt dagegen eine erfindungsgemäße Prüfvorrichtung für HUDs. Im Gegensatz zur herkömmlichen Prüfvorrichtung aus Fig. 3 wird die Windschutzscheibe 1 nicht direkt von der bildgebenden Einheit 8 bestrahlt. Stattdessen wird die Strahlung durch ein optisches Element 13 in Richtung der Windschutzscheibe 1 umgelenkt. Die Strahlung ist wiederum durch graue Blockpfeile dargestellt. Durch das optische Element 13 kann Einfluss auf das virtuelle Bild 7 genommen werden, so dass dieses so umgestaltet wird, dass es näherungsweise in einer Ebene angeordnet ist, wie in der Darstellung angedeutet. Zumindest wird die Krümmung des Bildes 7 soweit reduziert, dass seine Ausdehnung entlang der optischen Achse höchstens so groß ist wie der Tiefenschärfebereich der Kameraeinheit 12. Die Kameraeinheit 12 kann dann so fokussiert werden, dass das gesamte Bild 7 scharf aufgenommen wird und eine Auswertung problemlos möglich ist.

Das optische Element 13 ist beispielsweise als gekrümmter Spiegel aus einer hochpolierten Metallplatte ausgebildet, wobei der erfindungsgemäße Einfluss auf die Krümmung des Bildes 7 durch ein geeignetes Krümmungsprofil des Spiegels erreicht wird, bei dem sich der Krümmungsradius ausgehend vom Zentrum des Spiegels in Richtung der Seitenränder geeignet ändert.

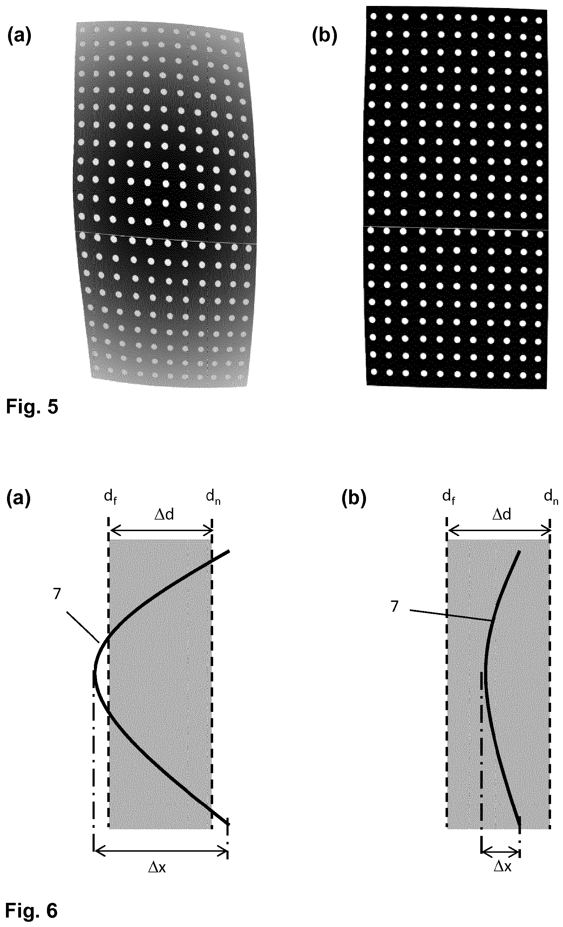

Fig. 5 zeigt simulierte Aufnahmen eines Beispiels der vorliegenden Erfindung und eines Vergleichsbeispiels. Bei Fig. 5 (a) wurde eine herkömmliche Prüfvorrichtung nach Fig. 3 zugrunde gelegt, bei der die Windschutzscheibe 1 direkt mit der bildgebenden Einheit 8 aus der Position des HUD-Projektors bestrahlt wurde. Es ist deutlich zu erkennen, dass Bereiche des Bildes unscharf abgebildet sind, da sie nicht im Tiefenschärfebereich der Kameraeinheit 12 liegen. Dagegen wurde bei Fig. 5 (b) eine erfindungsgemäße Prüfvorrichtung nach Fig. 4 zugrunde gelegt mit einem asphärischen Spiegel als optisches Element 13. Die Ausdehnung des Bildes 7 entlang der optischen Achse kann durch das optische Element 13 reduziert werden, so dass das Bild 7 vollständig im Tiefenschärfebereich liegt und entsprechend scharf abgebildet wird.

Bei den Simulationen wurde jeweils eine hinterleuchtete Lochplatte mit einem zweidimensionalen Muster an Löchern als bildgebende Einheit angenommen, eine Projektionsdistanz von 10 m und eine Bildgröße von 1600 mm x 800 mm (in der Ebene des virtuellen Bildes gemessen im Abstand von 10 Metern von der zentralen Kamera (Augunkt). In Fig. 5 (a) beträgt der Abstand der Lochplatte zur Verbundscheibe 10 m. In Fig. 5 (b) beträgt der Abstand des asphärischen Spiegels zur Verbundscheibe 300 mm.

Fig. 6 veranschaulicht den angestrebten Effekt der vorliegenden Erfindung. Die Kameraeinheit 12 hat einen begrenzten Tiefenschärfebereich $\Delta d$. Dieser ist bei gegebener Fokuseinstellung der Bereich zwischen dem Fernpunkt $d_f$ (von der Kameraeinheit 12 am weitesten entfernter Punkt, der scharf dargestellt wird) und dem Nahpunkt $d_n$ (der Kameraeinheit 12 am nächsten gelegener Punkt, der scharf dargestellt wird) entlang der optischen Achse (Verbindungsachse zwischen Kameraeinheit 12 und Zentrum des Bildes 12). Das virtuelle Bild 7 ist im Raum gekrümmt, was in erster Linie durch die Krümmung der Windschutzscheibe 1 hervorgerufen wird. Dies führt zu einer Ausdehnung $\Delta x$ des Bildes 7 entlang der optischen Achse. Ist die Ausdehnung $\Delta x$ größer als der Tiefenschärfebereich $\Delta d$, so existiert keine Fokusebene, mit der das gesamte Bild 7 scharf dargestellt werden kann - es erstreckt sich stets teilweise außerhalb des Tiefenschärfebereichs $\Delta d$ (Fig. 6a). Durch das erfindungsgemäße optische Element 13 wird die Ausdehnung $\Delta x$ verringert, so dass sie geringer ist als der Tiefenschärfebereich $\Delta d$. Es kann nun eine Fokusebene gewählt werden, für die das gesamte Bild 7 scharf dargestellt wird und im Anschluss analysiert werden kann (Fig. 6b). Um die Möglichkeit eines insgesamt scharf dargestellten Bildes 7 zu eröffnen, muss allgemein gelten:

$$\Delta x \leq \Delta d$$

Das Bild 7 ist hier der Einfachheit halber in Form einer einzelnen Linie dargestellt. In der Realität bezieht sich die Ausdehnung $\Delta x$ auf die Gesamtheit aus Hauptbild und Geisterbild, da beide zur Analyse scharf dargestellt werden sollen.

Bezugszeichenliste:

1 Windschutzscheibe
2 Außenscheibe
3 Innenscheibe
4 thermoplastische Zwischenschicht
5 Projektor
6 Betrachter / Fahrzeugfahrer
7 virtuelles Bild
8 bildgebende Einheit
9 (Metall-)platte mit Muster an Durchführungen
10 flächige Lichtquelle
11 Positionierungsvorrichtung für die Windschutzscheibe
12 Kameraeinheit
13 optisches Element

O     Oberkante der Windschutzscheibe 1
U     Unterkante der Windschutzscheibe 1
B     HUD-Bereich der Windschutzscheibe 1

$\alpha$     Keilwinkel der Zwischenschicht 4
$\beta$     Einbauwinkel von 1 zur Horizontalen
d     Projektionsdistanz / Abstand von 6 und 7
w     Bildweite / Abstand von 1 und 7

$d_n$     Nahpunkt der Kameraeinheit 12
$d_f$     Fernpunkt der Kameraeinheit 12
$\Delta d$     Tiefenschärfebereich der Kameraeinheit 12
$\Delta x$     Ausdehnung des Bildes 7 entlang der optischen Achse

(E)     Eyebox
A-A'     vertikale Schnittlinie

**Patentansprüche**

1.  Prüfvorrichtung für ein Head-Up-Display (HUD), mindestens umfassend

    - eine bildgebende Einheit (8),
    - ein optisches Element (13), angeordnet, um die Strahlung der bildgebenden Einheit (8) in Richtung einer Windschutzscheibe (1) umzulenken und dadurch einen HUD-Bereich (B) der Windschutzscheibe (1) zu bestrahlen, um ein virtuelles Bild (7) zu erzeugen, wobei der HUD-Bereich (B) der Windschutzscheibe (1) Krümmungsradien im Bereich von 2 m bis 20 m aufweist,
    - eine Positionierungsvorrichtung (11), angeordnet, um die Windschutzscheibe (1) in einer definierten Anordnung zum optischen Element (13) zu fixieren, und
    - eine Kameraeinheit (12), angeordnet, um das virtuelle Bild (7) durch die Windschutzscheibe (1) hindurch aus verschiedenen Augpositionen aufzunehmen,
    wobei das optische Element (13) ein gekrümmter Spiegel oder eine Linse ist und derart ausgelegt ist, dass eine durch die Windschutzscheibe (1) verursachte Krümmung des virtuellen Bilds im Raum verringert wird, so dass das gesamte virtuelle Bild (7) innerhalb des Tiefenschärfebereichs ($\Delta d$) der Kameraeinheit (12) liegt, wobei die Ausdehnung ($\Delta x$) des virtuellen Bildes (7) entlang der optischen Achse kleiner oder gleich dem Tiefenschärfebereich ($\Delta d$) der Kameraeinheit (12) ist, während die Ausdehnung ($\Delta x$) des virtuellen Bildes (7) entlang der optischen Achse ohne Verwendung des optischen Elements (13) größer als der Tiefenschärfebereich ($\Delta d$) der Kameraeinheit (12) ist, wobei die Prüfvorrichtung dazu dient, das virtuelle Bild (7) mit einer Projektionsdistanz (d) von mehr als 3 m zu erzeugen, wobei die bildgebende Einheit (8) eine Platte (9) mit einem Muster an Durchführungen umfasst, hinterleuchtet von einer flächigen Lichtquelle (10), oder ein Display ist.

2.  Prüfvorrichtung nach Anspruch 1, die geeignet ist, das virtuelle Bild (7) mit einer Projektionsdistanz (d) von mehr als 4 m, bevorzugt mehr als 5 m, zu erzeugen.

3.  Prüfvorrichtung nach einem der Ansprüche 1 bis 2, wobei das optische Element (13) ein hoch polierter Metallspiegel ist.

4.  Prüfvorrichtung nach einem der Ansprüche 1 bis 3, wobei der Krümmungsradius des Spiegels oder der Linse vom Zentrum in Richtung der Ränder veränderlich ist.

5.  Prüfvorrichtung nach einem der Ansprüche 1 bis 4, wobei das optische Element (13) nicht drehbar gelagert ist.

6.  Prüfvorrichtung nach einem der Ansprüche 1 bis 5, wobei die Kameraeinheit (12) realisiert ist als eine einzelne, beweglich gelagerte Kamera oder als eine Vielzahl von statisch gelagerten Kameras.

7.  Verfahren zur Prüfung eines Head-Up-Displays (HUD) mit der Prüfvorrichtung nach einem der Ansprüche 1 bis 6, umfassend die folgenden Verfahrensschritte:

    (a) Positionierung einer Windschutzscheibe (1) mit einem HUD-Bereich (B) mittels einer Positionierungsvorrichtung (11) in einer definierten Anordnung zu einem optischen Element (13),
    (b) Bestrahlung des optischen Elements (13) durch eine bildgebende Einheit (8), wobei die Strahlung durch das optische Element (13) in Richtung der Windschutzscheibe (1) umgelenkt wird und der HUD-Bereich (B) bestrahlt wird, wobei ein virtuelles Bild (7) erzeugt wird,
    (c) Aufnahme des virtuellen Bildes (7) mittels einer Kameraeinheit (12) aus verschiedenen Augpositionen,
    wobei das optische Element (13) derart ausgelegt ist, dass eine durch die Windschutzscheibe (1) verursachte Krümmung des virtuellen Bilds im Raum verringert wird, so dass das gesamte virtuelle Bild (7) innerhalb des Tiefenschärfebereichs ($\Delta d$) der Kameraeinheit (12) liegt, wobei die Ausdehnung ($\Delta x$) des Bildes (7) entlang der optischen Achse kleiner oder gleich dem Tiefenschärfebereich ($\Delta d$) der Kameraeinheit (12) ist, während die Ausdehnung ($\Delta x$) des Bildes (7) entlang der optischen Achse ohne Verwendung des optischen Elements (13) größer als der Tiefenschärfebereich (Δd) der Kameraeinheit (12) ist,

wobei das virtuelle Bild (7) mit einer Projektionsdistanz (d) von mehr als 3 m erzeugt wird.

8. Verfahren nach Anspruch 7, wobei das virtuelle Bild (7) mit einer Projektionsdistanz (d) von mehr als 4 m, bevorzugt mehr als 5 m erzeugt wird.

9. Verfahren nach Anspruch 8, wobei der HUD-Bereich (B) mindestens 7 % der Fläche der Windschutzscheibe (1) ausmacht, bevorzugt mindestens 8 %.

10. Verfahren nach einem der Ansprüche Anspruch 7 bis 9, wobei die Windschutzscheibe (1) eine Außenscheibe (2) und eine Innenscheibe (3) umfasst, die mittels einer thermoplastischen Zwischenschicht (4) miteinander verbunden sind, wobei die Zwischenschicht (4) zumindest im HUD-Bereich (B) keilförmig ausgestaltet ist.

11. Verfahren nach Anspruch 10, wobei die Windschutzscheibe (1) über die Innenscheibe (3) bestrahlt wird.

**Claims**

1. Testing device for a head-up display (HUD), at least comprising

    - an imaging unit (8),
    - an optical element (13), arranged for deflecting the radiation of the imaging unit (8) in the direction of a windshield (1) and thereby irradiating an **HUD** region (B) of the windshield (1) in order to generate a virtual image (7), wherein the **HUD** region (B) of the windshield (1) has radii of curvature ranging from 2 m to 20 m,
    - a positioning device (11), arranged for fixing the windshield (1) in a defined arrangement relative to the optical element (13), and
    - a camera unit (12), arranged for capturing the virtual image (7) through the windshield (1) from different eye positions,
    wherein the optical element (13) is a curved mirror or a lens and is configured such that a curvature of the virtual image due to the windshield (1) is reduced in space, such that the entire virtual image (7) lies within the depth of field range (Δd) of the camera unit (12), wherein the expansion (Δx) of the virtual image (7) along the optical axis is less than or equal to the depth of field range (Δd) of the camera unit (12), while the expansion (Δx) of the virtual image (7) along the optical axis without using the optical element (13) is greater than the depth of field range (Δd) of the camera unit (12), wherein the testing device is configured to generate the virtual image (7) with a projection distance (d) of more than 3 m,

wherein the imaging unit (8) includes a plate (9) with a pattern of perforations, backlit by a flat light source (10), or is implemented as a display.

2. Testing device according to claim 1, which is suitable for generating the virtual image (7) with a projection distance (d) of more than 4 m, preferably more than 5 m.

3. Testing device according to one of claims 1 through 2, wherein the optical element (13) is a highly polished metal mirror.

4. Testing device according to one of claims 1 through 3, wherein the radius of curvature of the mirror or the lens is variable from the centre toward the edges.

5. Testing device according to one of claims 1 through 4, wherein the optical element (13) is mounted non-rotatably.

6. Testing device according to one of claims 1 through 5, wherein the camera unit (12) is implemented as a single, movably mounted camera or as a plurality of statically mounted cameras.

7. Method for testing a head-up display (HUD) with the testing device according to one of claims 1 through 6, comprising the following steps:

    (a) Positioning a windshield (1) with an **HUD** region (B) by means of a positioning device (11) in a defined arrangement relative to an optical element (13),
    (b) Irradiating the optical element (13) by an imaging unit (8), wherein the radiation is deflected by the optical element (13) in the direction of the windshield (1), and the **HUD** region (B) is irradiated, with a virtual image (7) generated thereby,
    (c) Capturing the virtual image (7) by means of a camera unit (12) from different eye positions,
    wherein the optical element (13) is configured such that a curvature of the virtual image due to the windshield (1) is reduced in space, such that the entire virtual image (7) lies within the depth of field range (Δd) of the camera unit (12) wherein the expansion (Δx) of the image (7) along the optical axis is less than or equal to the depth of field range (Δd) of the camera unit (12), while the expansion (Δx) of the image (7) along the optical axis without using the optical element (13) is greater than the depth of field range (Δd) of the camera unit (12),
    wherein the virtual image (7) is generated with a projection distance (d) of more than 3 m.

8. Method according to claim 7, wherein the virtual image (7) is generated with a projection distance (d) of more than 4 m, preferably more than 5 m.

9. Method according to claim 8, wherein the **HUD** region (B) makes up at least 7% of the area of the windshield (1), preferably at least 8%.

10. Method according to one of claims 7 through 9, wherein the windshield (1) comprises an outer pane (2) and an inner pane (3) that are joined to one another by means of a thermoplastic intermediate layer (4), wherein the intermediate layer (4) is wedge-shaped at least in the **HUD** region (B).

11. Method according to claim 10, wherein the windshield (1) is irradiated via the inner pane (3).

**Revendications**

1. Dispositif de test pour un affichage tête haute (HUD), comprenant au moins

   - une unité d'imagerie (8),
   - un élément optique (13), agencé pour dévier le rayonnement de l'unité d'imagerie (8) en direction d'un pare-brise (1) et irradier ainsi une zone HUD (B) du pare-brise (1) afin de générer une image virtuelle (7), dans lequel la zone HUD (B) du pare-brise (1) a des rayons de courbure compris entre 2 m et 20 m,
   - un dispositif de positionnement (11), agencé pour fixer le pare-brise (1) dans une disposition définie par rapport à l'élément optique (13), et
   - une unité de caméra (12), agencée pour capturer l'image virtuelle (7) à travers le pare-brise (1) à partir de différentes positions oculaires, dans lequel l'élément optique (13) est un miroir courbe ou une lentille et est configuré de telle sorte qu'une courbure de l'image virtuelle due au pare-brise (1) est réduite dans l'espace, de telle sorte que l'ensemble de l'image virtuelle (7) se trouve dans la plage de profondeur de champ ($\Delta$d) de l'unité de caméra (12), dans laquelle l'expansion ($\Delta$x) de l'image virtuelle (7) le long de l'axe optique est inférieure ou égale à la plage de profondeur de champ ($\Delta$d) de l'unité de caméra (12), tandis que l'expansion ($\Delta$x) de l'image virtuelle (7) le long de l'axe optique sans utiliser l'élément optique (13) est supérieure à la plage de profondeur de champ ($\Delta$d) de l'unité de caméra (12), dans lequel le dispositif de test est configuré pour générer l'image virtuelle (7) avec une distance de projection (d) supérieure à 3 m, dans lequel l'unité d'imagerie (8) comprend une plaque (9) avec un motif de perforations, rétroéclairée par une source lumineuse plate (10), ou est mise en œuvre sous la forme d'un écran.

2. Dispositif de test selon la revendication 1, qui est adapté pour générer l'image virtuelle (7) avec une distance de projection (d) supérieure à 4 m, de préférence supérieure à 5 m.

3. Dispositif de test selon l'une des revendications 1 à 2, dans lequel l'élément optique (13) est un miroir métallique hautement poli.

4. Dispositif de test selon l'une des revendications 1 à 3, dans lequel le rayon de courbure du miroir ou de la lentille est variable du centre vers les bords.

5. Dispositif de test selon l'une des revendications 1 à 4, dans lequel l'élément optique (13) est monté de manière non rotative.

6. Dispositif de test selon l'une des revendications 1 à 5, dans lequel l'unité de caméra (12) est mise en œuvre sous la forme d'une seule caméra montée de manière mobile ou d'une pluralité de caméras montées de manière statique.

7. Procédé pour tester un affichage tête haute (HUD) avec le dispositif de test selon l'une des revendications 1 à 6, comprenant les étapes suivantes:

   (a) positionner un pare-brise (1) avec une zone HUD (B) au moyen d'un dispositif de positionnement (11) dans une disposition définie par rapport à un élément optique (13),
   (b) irradier l'élément optique (13) par une unité d'imagerie (8), dans lequel le rayonnement est dévié par l'élément optique (13) dans la direction du pare-brise (1), et la zone HUD (B) est irradiée, avec une image virtuelle (7) générée par celle-ci,
   (c) capturer l'image virtuelle (7) au moyen d'une unité de caméra (12) à partir de différentes positions oculaires, dans lequel l'élément optique (13) est configuré de telle sorte qu'une courbure de l'image virtuelle due au pare-brise (1) est réduite dans l'espace, de telle sorte que l'ensemble de l'image virtuelle (7) se trouve dans la plage de profondeur de champ ($\Delta$d) de l'unité de caméra (12), dans laquelle l'expansion ($\Delta$x) de l'image (7) le long de l'axe optique est inférieure ou égale à la plage de profondeur de champ ($\Delta$d) de l'unité de caméra (12), tandis que l'expansion ($\Delta$x) de l'image (7) le long de l'axe optique sans utiliser l'élément optique (13) est supérieure à la plage de profondeur de champ ($\Delta$d) de l'unité de caméra (12),

dans lequel l'image virtuelle (7) est générée avec une distance de projection (d) supérieure à 3 m.

8. Procédé selon la revendication 7, dans lequel l'image virtuelle (7) est générée avec une distance de projection (d) supérieure à 4 m, de préférence supérieure à 5 m.

9. Procédé selon la revendication 8, dans lequel la zone HUD (B) représente au moins 7 % de la surface du pare-brise (1), de préférence au moins 8 %.

10. Procédé selon l'une des revendications 7 à 9, dans lequel le pare-brise (1) comprend une vitre extérieure (2) et une vitre intérieure (3) qui sont reliées l'une à l'autre au moyen d'une couche intermédiaire thermoplastique (4), dans lequel la couche intermédiaire (4) est en forme de coin au moins dans la zone HUD (B).

11. Procédé selon la revendication 10, dans lequel le pare-brise (1) est irradié via la vitre intérieure (3).

**Fig. 1**

**Fig. 2**

**Fig. 3 – Stand der Technik**

**Fig. 4**

**(a)**

**(b)**

**Fig. 5**

**(a)**

**(b)**

**Fig. 6**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102014001710 A1
- WO 2014079567 A1
- US 2013249942 A1
- US 2014354692 A1
- US 2014375816 A1
- WO 2013136374 A1
- WO 2017138430 A1
- US 4790613 A
- US 9551867 B1

### In der Beschreibung aufgeführte Nicht-Patentliteratur

- **VON ALEXANDER NEUMANN**. Simulationsbasierte Messtechnik zur Prüfung von Head-up Displays. *Dissertation*, 01 January 2012
- Simulationsbasierte Messtechnik zur Prüfung von Head-Up Displays. **VON ALEXANDER NEUMANN**. Dissertation. Institut für Informatik der Technischen Universität München, 2012